# FASCICULE DE BREVET EUROPEEN

(11) **EP 4 065 401 B1**
(45) Date de publication et mention de la délivrance du brevet: **06.09.2023**
(21) Numéro de dépôt: 20811678.0
(22) Date de dépôt: 30.11.2020
(51) Int. Cl.: B60K 15/03, F16J 15/3232, F16J 15/06, F16J 15/10

(54) **JOINT MULTILOBÉ ET DISPOSITIF D'ÉTANCHÉITÉ COMPORTANT UN TEL JOINT**
MEHRLIPPENDICHTUNG UND DICHTVORRICHTUNG MIT EINER SOLCHEN DICHTUNG
MULTI-LOBE SEAL AND SEALING DEVICE COMPRISING SUCH A SEAL

(30) Priorité: 29.11.2019 FR 1913565
(43) Date de publication de la demande: 05.10.2022
(73) Titulaire: Plastic Omnium Advanced Innovation And Research, 1200 Bruxelles (BE)
(72) Inventeur: COING, Jean-François, 1130 BRUXELLES (BE); LEMASSON, Wilfried, 1130 BRUXELLES (BE)
(74) Mandataire: LLR
(86) Numéro de dépôt international: PCT/EP2020/083854
(87) Numéro de publication internationale: WO 2021/105494

(56) Documents cités:
- EP-A1- 0 838 360
- EP-A2- 1 514 718
- FR-A1- 2 869 842
- US-A1- 2003 209 905

## Description

### Domaine technique de l'invention

L'invention concerne un joint multilobé et un dispositif d'étanchéité comportant un tel joint pour un réservoir à carburant pour véhicules automobiles, ainsi qu'un réservoir à carburant comprenant ledit dispositif d'étanchéité. Plus particulièrement, l'invention concerne un procédé de fabrication d'un réservoir à carburant pour véhicules automobiles.

### Arrière-plan technique de l'invention

À cet effet, les réservoirs à carburant de divers types, doivent généralement respecter les normes d'imperméabilité et de perméabilité, en fonction du type d'utilisation pour lequel ils sont conçus et des exigences en termes de considérations environnementales auxquelles ils doivent satisfaire. Actuellement, en Europe, et dans le reste du monde, nous assistons actuellement à un resserrement considérable des exigences en matière de limitation des émissions et de la propagation de polluants dans l'atmosphère et l'environnement en général.

En outre, les limites d'émissions admissibles sont devenues si faibles que les pertes associées aux fuites et à la perméabilité aux interfaces entre les composants et le réservoir sont maintenant responsables d'une proportion élevée, des pertes totales, dans le système réservoir plus accessoires. La conception des réservoirs à carburant évolue donc rapidement vers des techniques capables de mieux garantir l'imperméabilité et la sécurité environnementale dans des conditions d'utilisation variables.

Par conséquent, les réservoirs à carburant se trouvant notamment, à bord d'un véhicule automobile, sont connectés à d'autres composants, généralement imperméables au carburant, nécessitant la présence de plusieurs ouvertures sur la paroi multicouche du réservoir autour desquelles les composants sont fixés. L'incorporation de composants dans ces réservoirs pose le problème de leur fixation, étanche et imperméable, à une ouverture pratiquée dans ces réservoirs. Ces ouvertures, créant des discontinuités dans la couche barrière de la paroi multicouche d'un réservoir à carburant, représentent un risque élevé de fuite ou de perméation de carburant. Le fait d'avoir un réservoir multicouche et un composant ayant chacun un faible niveau de perméabilité n'est pas suffisant pour garantir que le niveau de perméabilité à leur interface mutuelle sera également faible.

Ainsi, un dispositif d'étanchéité peut être utilisée notamment pour un réservoir à carburant. Pour contrôler la fuite de carburant, il est nécessaire de connaître avec précision les chemins de fuites du carburant autour de l'ouverture définie par l'espace existant entre un dispositif d'étanchéité pour une paroi multicouche d'un réservoir à carburant et la couche barrière au carburant de la paroi d'un réservoir à carburant.

Cependant, étant donné que la position précise de la couche barrière au carburant dans l'épaisseur de la paroi du réservoir est inconnue, ces chemins de perméation ne sont pas prédéterminés.

Par conséquent, les risques liés aux fuites de carburants doivent être réduits dans les réservoirs à carburant, en particulier autour des ouvertures dans la paroi multicouche du réservoir à carburant. Ces ouvertures sont l'une des principales sources de fuites des carburants.

Pour résoudre ce problème de perméabilité aux interfaces entre le réservoir multicouche et le ou les composants, différentes techniques d'étanchéité d'un réservoir multicouche sont déjà connues comme par exemple des documents EP 0 838 360, US 2003/209905, FR 2 869 842 et EP 1 514 718. Cependant, ces solutions présentent généralement l'inconvénient d'un coût élevé et/ou d'une perméabilité élevée. De plus, dans le cas d'une fixation permanente du composant au réservoir, il n'est pas possible de remplacer facilement le composant sans endommager le dispositif d'étanchéité lui-même.

Afin de pouvoir résoudre ce problème de perméabilité aux interfaces entre la paroi multicouche d'un réservoir à carburant et le ou les composants, ainsi que le coût d'assemblage élevé des différentes techniques d'étanchéité, il a été proposé différentes techniques d'étanchéité dans l'état de la technique, comme par exemple dans la demande de brevet US2013/0146595 qui divulgue un moyen d'étanchéité composé d'un joint en contact de la couche barrière aux carburants et d'une paroi multicouche d'un réservoir à carburant. L'étanchéité est assurée par le joint imperméable aux carburants pressé élastiquement par le composant contre la paroi ou encore par soudure du joint au composant. Un tel ensemble possède les désavantages, de présenter une extrusion sur la paroi multicouche du réservoir à carburant, au niveau de l'ouverture du réservoir à carburant, dans le cas où le joint est pressé élastiquement par le composant contre la paroi multicouche du réservoir à carburant. Dans le cas, où le réservoir à carburant n'est pas extrudé, le joint doit être soudé à la paroi multicouche du réservoir à carburant permettant le maintien du joint. Par conséquent, les processus de montage sont longs et laborieux, augmentant le nombre d'étapes de réalisations d'un moyen d'étanchéité et augmentant ainsi les risques de fuite, de par un grand nombre d'étapes de réalisation du moyen d'étanchéité.

### Résumé de l'invention

L'invention a notamment pour objectif de pallier ces inconvénients de l'art antérieur.

L'invention, dans au moins un de ses modes de réalisation, a encore pour objectif de fournir un dispositif d'étanchéité pour réservoir à carburant pour véhicules automobiles possédant de meilleures propriétés d'étanchéités au carburant au niveau d'une ouverture dans ledit réservoir à carburant.

Plus précisément, un objectif de l'invention, dans au moins un de ses modes de réalisation, est de fournir un dispositif d'étanchéité pour réservoir à carburant pour véhicules automobiles nécessitant un nombre réduit d'étapes de réalisation dudit dispositif d'étanchéité, réduisant par conséquent, le coût de production dudit dispositif d'étanchéité.

De plus, l'invention a encore pour objectif, dans un de ses modes de réalisation, de fournir un réservoir à carburant pour véhicules automobiles comprenant un dispositif d'étanchéité pour réservoir à carburant pour véhicules automobiles.

Un autre objectif de l'invention, dans au moins un de ses modes de réalisation, est de mettre en oeuvre un procédé de fabrication d'un dispositif d'étanchéité pour réservoir à carburant pour véhicules automobiles.

Ainsi, l'invention se rapporte à un joint multilobé pour un dispositif d'étanchéité d'une ouverture de paroi d'un réservoir à carburant, la paroi de structure multicouche ayant au moins une couche de matériau barrière aux carburants et une ouverture dans la paroi de structure multicouche, le joint multilobé étant imperméable aux carburants et apte à être positionné en contact, au niveau de l'ouverture de la paroi de structure multicouche du réservoir à carburant, entre la couche de matériau barrière aux carburants de la paroi de structure multicouche du réservoir à carburant et un composant, le joint multilobé comportant, sur la face apte à être en contact avec la couche de matériau barrière aux carburants de la paroi de structure multicouche, au moins deux excroissances dont une vient s'appuyer sur la couche de matériau barrière aux carburants de la paroi de structure multicouche.

Par l'expression « joint multilobé », on entend désigner un joint possédant plusieurs lobes ou excroissances, à la différence d'un joint type O-ring possédant un seul lobe. En d'autres termes, un joint radial d'étanchéité d'arbre ou un joint type joint à lèvres.

Ainsi, le joint multilobé du dispositif d'étanchéité pour réservoir à carburant pour véhicules automobiles sera limité dans ses mouvements plus longtemps durant les phases de vie d'un réservoir à carburant pour véhicules automobiles, à savoir les modifications au sein du réservoir à carburant par exemple de la pression ou encore de la température. De plus, la limitation des mouvements de joint multilobé empêche le joint multilobé de tomber dans le réservoir à carburant durant l'étape d'insertion du dispositif d'étanchéité et assure par conséquent une meilleure étanchéité autour de l'ouverture de la paroi de structure multicouche.

Par le terme « au moins deux excroissances », on entend désigner le fait que le joint multilobé possède au moins une excroissance positionnée en contact de la couche de matériau barrière aux carburants et une autre excroissance adjacente, ou de préférence deux autres excroissances de part et d'autre, de ladite excroissance en contact avec la couche de matériau barrière aux carburants de la paroi de structure multicouche.

Le joint multilobé doit posséder au moins une excroissance positionnée en contact de la couche de matériau barrière aux carburants et de préférence deux autres excroissances de part et d'autre de ladite excroissance en contact avec la couche de matériau barrière aux carburants de la paroi de structure multicouche, car la position exacte de la couche de matériau barrière aux carburants exposée par l'ouverture de la paroi de structure multicouche est inconnue. Ainsi, il faut un joint multilobé suffisamment épais pour reposer fermement contre la surface totale de la partie de la couche de matériau barrière aux carburants exposée dans l'ouverture.

Ainsi, le joint multilobé du dispositif d'étanchéité pour réservoir à carburant pour véhicules automobiles assure une meilleure étanchéité autour de l'ouverture de la paroi de structure multicouche, car le trajet de fuite de carburant autour de l'ouverture est éliminé grâce à un contact étroit entre la couche de matériau barrière aux carburants et le joint multilobé.

Avantageusement, le joint multilobé peut comprendre en outre au moins un épaulement, destiné à reposer sur une couche extérieure de paroi de structure multicouche d'un réservoir à carburant. Ainsi, la limitation des mouvements de joint multilobé empêche le joint multilobé de tomber dans le réservoir à carburant et assure par conséquent une étanchéité optimale plus longtemps durant les phases de vie d'un réservoir à carburant pour véhicules automobiles.

Selon l'invention, un dispositif d'étanchéité pour une ouverture d'une paroi d'un réservoir à carburant pour véhicules automobiles, comprend, une paroi de structure multicouche ayant au moins une couche de matériau barrière aux carburants et une ouverture dans la paroi de structure multicouche, ledit dispositif comprend un composant apte à être inséré dans l'ouverture de la paroi de structure multicouche du réservoir à carburant ; un joint multilobé tel que présenté plus haut apte à être positionné entre la couche de matériau barrière aux carburants de la paroi de structure multicouche du réservoir à carburant et le composant ; et un élément de fixation apte à être fixé à au moins une couche extérieure de la paroi de structure multicouche du réservoir à carburant.

Le principe général de l'invention repose sur une optimisation de l'étanchéité d'un réservoir à carburant pour véhicules automobiles, tout en diminuant le nombre et la complexité des étapes nécessaires à la réalisation d'un dispositif d'étanchéité pour réservoir à carburant pour véhicules automobiles, permettant ainsi une diminution du coût de production d'un dispositif d'étanchéité pour réservoir à carburant pour véhicules automobiles.

Ainsi, l'invention repose sur une approche tout à fait nouvelle et inventive de réalisation d'un dispositif d'étanchéité pour réservoir à carburant pour véhicules automobiles, composé d'un composant apte à être inséré dans une ouverture de la paroi de structure multicouche du réservoir à carburant pour véhicules automobiles, d'un joint multilobé imperméable aux carburants, apte à être positionné de façon à être en contact avec la paroi de structure multicouche du réservoir à carburant et avec le composant inséré dans l'ouverture de la paroi de structure multicouche du réservoir à carburant ; et un élément de fixation apte à être fixé à au moins une couche extérieure de la paroi de structure multicouche du réservoir à carburant.

Par l'expression « une paroi de structure multicouche », on entend désigner le fait que le réservoir à carburant pour véhicules automobiles comprend au moins une couche d'un plastique, préférentiellement un thermoplastique et au moins une couche de matériau barrière aux carburants. Préférentiellement, la paroi de structure multicouche possède deux couches d'un plastique et une couche de matériau barrière aux carburants. Lesdites couches sont positionnées de façon à ce qu'il y est une couche de matériau plastique supérieure, une couche de matériau plastique inférieure et la couche de matériau barrière au centre de ces deux couches de matériau plastique. En d'autres termes, la couche de matériau barrière est prise en sandwich entre les deux couches de matériau plastique. Les multicouches de la paroi du réservoir à carburant sont fixées mutuellement lorsque la paroi de structure multicouche est formée, en conformant la paroi de structure multicouche à la forme d'un moule, en chauffant les matériaux de la paroi de structure multicouches, en permettant aux matériaux de la paroi de structure multicouche de fusionner ensemble à température élevée et en les refroidissant.

Le matériau plastique du réservoir à carburant pour véhicules automobiles est un matériau plastique sélectionné parmi le groupe de matériaux plastiques à base de polyoxyméthylène, POM, de polysulfure de phénylène, PPS, de polyamide, PA, tel que du polyphtalamide, PPA, de polyétheréthercétone, PEEK, de polyamide imide, PAI, de polyaryléthercétone, PAEK, de polycétone, PK ou de polyoléfine, préférentiellement du polyéthylène, PE, plus préférentiellement du polyéthylène haute densité, HDPE.

Le terme « thermoplastique » désigne tout polymère thermoplastique, y compris les élastomères thermoplastiques, ainsi que leur mélange.

Le terme « polymère » désigne à la fois des homopolymères et les copolymères, en particulier les copolymères binaires ou ternaires. Des exemples de tels copolymères sont les copolymères aléatoires, les copolymères séquencés linéaires, d'autres copolymères séquencés et les copolymères greffés sans limitation.

Par l'expression « groupe de matériaux plastiques à base de », on entend désigner le fait que le matériau plastique comprend au moins 50% en poids du matériau plastique sélectionné.

Les notions d'inférieur(es) ou de supérieur(es) sont définies par rapport à la réalisation finale du réservoir à carburant pour véhicules automobiles. Ces notions sont définies en prenant comme référence le centre du réservoir à carburant. Une couche inférieure de la paroi de structure multicouche étant plus proche du centre du réservoir à carburant qu'une couche supérieure de la même paroi.

Par l'expression « couche de matériau barrière aux carburants », on entend désigner la couche de la paroi de structure multicouche imperméable aux carburants. En d'autres termes, la couche permettant l'étanchéité de la paroi de structure multicouche aux carburants sous formes liquides ou gazeux. Des exemples de matériaux barrières sont des résines à base de polyamides ou de copolyamides, copolymères aléatoires éthylène/alcool vinylique, EVOH ou polymères thermotropes à cristaux liquides, tels que les copolyesters d'acide p-hydroxybenzoïque et d'acide 6-hydroxy-2-naphtoïque et les copolyesters d'acide p-hydroxybenzoïque avec acide téréphtalique et 4,4' biphénol. Préférentiellement, le matériau barrière est de l'alcool vinylique d'éthylène.

Par l'expression « un composant », on entend désigner toute pièce obtenue par une technique de mise en forme telle que, par exemple, le moulage par soufflage ou par injection ou toute autre technique connue de l'homme de l'art. En particulier, la pièce est formée de façon à pouvoir être inséré dans une ouverture d'un réservoir à carburant et à pouvoir compresser le joint multilobé contre le bord de l'ouverture de la paroi de structure multicouche.

Par l'expression « le bord de l'ouverture de la paroi de structure multicouche », on entend désigner le flanc de la paroi de structure multicouche orientée vers l'ouverture du réservoir à carburant, suite au découpage de la paroi de structure multicouche.

Pour cela, une ouverture, de forme circulaire ou non, est généralement pratiquée dans la paroi de structure multicouche du réservoir à carburant selon toute technique connue de l'homme de l'art, comme par exemple : percer un trou à travers la paroi de structure multicouche, piquer pendant le soufflage, c'est-à-dire générer le trou avec l'aiguille qui sert à percer la paroi de structure multicouche à l'extrémité du moulage pour dégager les gaz, ou générer une géométrie appropriée lors du soufflage du corps creux. Il a, en effet, été observé que, de manière surprenante, un trou produit par piqûre a permis d'obtenir une couche barrière affleurante. Si la technique utilisée pour réaliser l'ouverture dans la paroi de structure multicouche ne permet pas d'obtenir la géométrie souhaitée, l'ouverture peut ensuite être usinée.

Par l'expression « une couche extérieure de la paroi de structure multicouche », on entend désigner une couche orientée vers l'extérieur du réservoir, au contact du milieu extérieur à l'inverse d'une couche intérieure, qui sera orientée vers l'intérieur du réservoir, au contact du carburant.

Les notions d'extérieur(es) ou d'intérieur(es) sont définies par rapport à la réalisation finale du réservoir à carburant pour véhicules automobiles et sont définies en prenant comme référence le centre du réservoir à carburant. Une couche intérieure de la paroi de structure multicouche étant plus proche du centre du réservoir à carburant qu'une couche extérieure de la même paroi.

Ainsi, un tel dispositif d'étanchéité pour réservoir à carburant pour véhicules automobiles permet d'obtenir une étanchéité aux carburants accrue au niveau de ou des ouvertures dans la paroi de structure multicouche d'un réservoir à carburant pour véhicules automobiles, tout en permettant un contrôle de compression du joint multilobé lors de son assemblage.

Avantageusement, le dispositif d'étanchéité pour réservoir à carburant pour véhicules automobiles, selon l'invention est tel que le joint multilobé possède, sur la face apte à être en contact avec le composant, un premier moyen de liaison se reposant sur le composant.

Par l'expression « un premier moyen de liaison », on entend désigner un moyen de liaison spécifique entre le composant inséré dans l'ouverture de la paroi de structure multicouche et la face du joint multilobé orientée vers le composant inséré dans l'ouverture de la paroi de structure multicouche.

Selon un mode de réalisation préférentiel, un tel dispositif d'étanchéité pour réservoir à carburant pour véhicules automobiles selon l'invention, est tel que le joint multilobé est à base de matériau possédant une faible perméabilité aux carburants, ledit matériau étant choisi parmi les fluoroélastomères, préférentiellement ledit matériau est du FPM.

Par l'expression « faible perméabilité aux carburants », on entend désigner le fait que le joint multilobé présente une perméabilité aux carburants inférieure à 10 g.mm/m².jour, ce qui lui permet d'être considéré comme imperméable aux carburants. La perméabilité est mesurée selon la procédure de test décrite dans la norme SAE J 2665 où le carburant de test est du carburant CE10 qui contient en volume 50 % de toluène, 50 % d'isooctane et 10 % d'éthanol, la température de test est 40°C, la pression de test est la pression atmosphérique et la durée de test est la durée nécessaire jusqu'à l'équilibre (régime d'émission stabilisé). À noter que la durée de test varie en fonction de l'épaisseur de l'échantillon.

Par l'expression « à base de matériau possédant une faible perméabilité aux carburants », on entend désigner le fait que le joint multilobé comprend au moins 50% en poids de matériau possédant une faible perméabilité aux carburants, préférentiellement 75% en poids de matériau possédant une faible perméabilité aux carburants, plus préférentiellement 90% en poids de matériau possédant une faible perméabilité aux carburants.

Ainsi, le joint multilobé permet une optimisation de l'étanchéité d'un réservoir à carburant pour véhicules automobiles.

Selon un mode de réalisation préférentiel, un tel dispositif d'étanchéité pour réservoir à carburant pour véhicules automobiles, est tel que le joint multilobé possède sur la face apte à être en contact avec le composant, au moins une protubérance s'appuyant sur le composant.

Par l'expression « au moins une protubérance », on entend désigner le fait que la face du joint multilobé apte à être en contact avec le composant possède au moins une partie saillante, avec laquelle le joint va s'appuyer sur le composant.

Ainsi, le joint multilobé du dispositif d'étanchéité pour réservoir à carburant pour véhicules automobiles possède une zone d'accroche supplémentaire avec le composant inséré dans l'ouverture de la paroi de structure multicouche. Les mouvements du joint multilobé seront limités plus longtemps durant les phases de vie d'un réservoir à carburant pour véhicules automobiles. De plus, le joint multilobé ne pourra pas chuter dans le réservoir à carburant durant l'étape d'insertion du dispositif d'étanchéité et assure par conséquent une meilleure étanchéité autour de l'ouverture de la paroi de structure multicouche.

Selon un mode de réalisation préférentiel, le dispositif d'étanchéité pour réservoir à carburant pour véhicules automobiles, est tel que le joint multilobé possède un second moyen de liaison se reposant sur la paroi de structure multicouche du réservoir à carburant.

Par le terme « un second moyen de liaison », on entend désigner un moyen de liaison spécifique entre la paroi de structure multicouche et la face du joint multilobé orientée vers la paroi de structure multicouche.

Ainsi, la limitation des mouvements de joint multilobé empêche le joint multilobé de tomber dans le réservoir à carburant et assure par conséquent une étanchéité optimale plus longtemps durant les phases de vie d'un réservoir à carburant pour véhicules automobiles.

Selon un mode de réalisation préférentiel, le dispositif d'étanchéité pour réservoir à carburant pour véhicules automobiles, est tel que le composant et le joint multilobé sont aptes à exercer une pression radiale sur la couche de matériau barrière aux carburants, une fois le dispositif d'étanchéité pour réservoir à carburant pour véhicules automobiles assemblé.

Par l'expression « une fois le dispositif d'étanchéité pour réservoir à carburant pour véhicules automobiles assemblé », on entend désigner le fait que le dispositif d'étanchéité soit dans sa position finale. En d'autres termes, une fois que toutes les pièces du dispositif d'étanchéité soient mises en place pour réaliser leurs fonctions, à savoir le joint multilobé est positionné sur le composant, puis l'ensemble est inséré dans l'ouverture. Les dimensions du joint multilobé et du composant sont telles que ces dernières permettent de réaliser une compression radiale sur la couche de matériau barrière aux carburants de la paroi de structure multicouche, et permettent aussi le fait que l'excroissance de joint multilobé soit positionnée en contact de la couche de matériau barrière aux carburants avec de préférence, deux autres excroissances de part et d'autre de ladite excroissance en contact avec la couche de matériau barrière aux carburants de la paroi de structure multicouche. Ensuite, un élément de fixation est fixé à la paroi de structure multicouche pour maintenir l'ensemble du dispositif joint multilobé plus composant. Alternativement, le joint multilobé peut être surmoulé sur le composant, à l'endroit prévu pour réaliser un ensemble joint multilobé plus composant permettant une étanchéité optimale.

De manière similaire, l'élément de fixation pourrait être monobloc avec le composant, c'est-à-dire être fabriqués en une seule pièce comme par exemple venus de matière tel que lors d'une coulée ou d'une injection afin d'optimiser encore d'avantage l'étanchéité. On comprend alors que le composant ne saurait se limiter à une pièce creuse en son centre.

Préférentiellement, le joint multilobé est positionné au contact de la couche de matériau barrière aux carburants de la paroi de structure multicouche du réservoir à carburant. Ainsi, le fait que le joint multilobé soit en contact avec la couche de matériau barrière aux carburants de la paroi de structure multicouche du réservoir à carburant pour véhicules automobiles permet de réduire les fuites de gaz ou de liquide à l'interface de contact entre le dispositif d'étanchéité pour réservoir à carburant pour véhicules automobiles et un réservoir à carburant pour véhicules automobiles. La compression radiale du joint multilobé donne d'excellents résultats en termes de réduction de la perméabilité, car elle permet de réduire la distance entre le joint multilobé et la couche de matériau barrière aux carburants. De plus, le joint multilobé compressé sera limité dans ses mouvements empêchant, la chute dans le réservoir à carburant durant l'étape d'insertion du dispositif d'étanchéité. Le joint multilobé reste ainsi en place par la compression radiale exercé par le composant.

Selon un mode de réalisation préférentiel, le dispositif d'étanchéité pour réservoir à carburant pour véhicules automobiles selon l'invention, est tel que le composant venant s'insérer dans l'ouverture de la paroi de structure multicouche est à base d'un matériau plastique, ledit matériau plastique étant choisi parmi les matériaux plastiques à base de polyoxyméthylène, de polysulfure de phénylène, de polyamide, de polyphtalamide, de polyétheréthercétone, de polyamide imide, de polyaryléthercétone, de polycétone ou de polyoléfine, préférentiellement, ledit matériau plastique est polyoxyméthylène.

Selon un mode de réalisation préférentiel, le dispositif d'étanchéité pour réservoir à carburant pour véhicules automobiles, est tel que le joint multilobé comprend au moins un épaulement, apte à être axialement compressé par le composant, reposant sur la paroi de structure multicouche d'un réservoir à carburant.

Par l'expression « épaulement », on entend désigner un changement de section d'une pièce ménageant, avant l'extrémité, une face destinée à servir d'appui à une autre pièce, en d'autres termes, une partie saillante permettant la liaison avec un autre élément en venant prendre appui sur ledit autre élément.

Ainsi, le joint multilobé du dispositif d'étanchéité pour réservoir à carburant pour véhicules automobiles assure une meilleure étanchéité autour de l'ouverture de la paroi de structure multicouche. De plus, le joint multilobé compressé ne tombera pas dans le réservoir à carburant durant l'étape d'insertion du dispositif d'étanchéité et limite les mouvements du joint multilobé plus longtemps durant les phases de vie d'un réservoir à carburant pour véhicules automobiles.

Selon un mode de réalisation préférentiel, le dispositif d'étanchéité pour réservoir à carburant pour véhicules automobiles, est tel que l'élément de fixation, en cas d'obturation de l'ouverture de la paroi de structure multicouche d'un réservoir à carburant pour véhicules automobiles, est apte à être une pièce pleine, préférentiellement ladite pièce est un disque.

Par l'expression « l'élément de fixation », on entend désigner un élément venant se fixer à la paroi de structure multicouche d'un réservoir à carburant pour véhicules automobiles permettant de venir maintenir les autres éléments constitutifs du dispositif d'étanchéité pour réservoir à carburant pour véhicules automobiles, à savoir le joint multilobé et le composant. Ainsi, l'élément de fixation se retrouve en contact avec le composant.

Par l'expression « en cas d'obturation de l'ouverture de la paroi », on entend désigner le fait, de la volonté du fabricant du réservoir à carburant pour véhicules automobiles de fermer l'ouverture de la paroi de structure multicouche.

Par l'expression « une pièce pleine », on entend désigner le fait que la pièce est composée d'un matériau dont le matériau utilise tout le volume de la pièce, ladite pièce a par conséquent, ni vide ni ouverture.

Ainsi, un tel élément de fixation permet de conférer au réservoir à carburant pour véhicules automobiles une résistance accrue à la pression entre les différents éléments constitutifs du dispositif d'étanchéité pour réservoir à carburant pour véhicules automobiles. Mais aussi une résistance mécanique améliorée aux pressions et sollicitations mécaniques diverses que subissent le composant et le joint multilobé. De plus, en limitant les mouvements possibles du composant, s'insérant dans l'ouverture de la paroi de structure multicouche, et par conséquent les mouvements du joint multilobé, par compression radiale, cela entraîne une limitation du risque de fuite des carburants à l'interface entre le joint multilobé et la couche de matériau barrière aux carburants de la paroi de structure multicouche.

Selon un autre mode de réalisation, le dispositif d'étanchéité pour réservoir à carburant pour véhicules automobiles, est tel que l'élément de fixation est à base de matériau plastique, ledit matériau plastique étant choisi parmi les matériaux plastiques à base de polyoléfine, préférentiellement, ledit matériau plastique est du polyéthylène haute densité, plus préférentiellement, ledit matériau plastique est du polyéthylène haute densité chargé.

Par l'expression « polyéthylène haute densité chargé », on entend désigner du polyéthylène haute densité chargé avec des fibres de verre ou encore des billes de verre, ces éléments sont donnés à titre d'exemple et sont ainsi, non limitatifs.

Ainsi, l'élément de fixation permet au dispositif d'étanchéité pour réservoir à carburant pour véhicules automobiles une résistance accrue aux pressions et sollicitations mécaniques diverses subies par le composant et le joint multilobé.

Selon un mode de réalisation préférentiel, le dispositif d'étanchéité pour réservoir à carburant pour véhicules automobiles, est tel que l'élément de fixation est fixé à la paroi de structure multicouche d'un réservoir à carburant, ledit moyen de fixation étant choisi parmi les méthodes de fixation telles que la soudure, le collage, le frittage, le surmoulage, préférentiellement, ladite liaison est réalisée par soudure.

Lorsque le moyen de fixation du dispositif d'étanchéité pour réservoir à carburant pour véhicules automobiles à ladite paroi de structure multicouche est une soudure, le matériau plastique sélectionné sera un matériau compatible chimiquement avec le matériau plastique constituant la paroi de structure multicouche tel qu'une polyoléfine, préférentiellement du polyéthylène haute densité, plus préférentiellement du polyéthylène haute densité chargé.

On entend par un matériau plastique « compatible chimiquement » avec un autre matériau plastique le fait que les matériaux plastique comprennent chacun des espèces chimiques pouvant être soudées ensemble, sans nécessiter d'ajout de matière supplémentaire. En d'autres termes, des matériaux plastiques compatibles chimiquement sont aptes à se lier intimement entre eux par fusion, et à réaliser en particulier un enchevêtrement moléculaire de chaînes polymériques entre eux. Le soudage des deux matériaux plastiques est compris comme la mise en contact des deux matériaux plastique de telle manière que le phénomène d'autohésion se produit à l'endroit du contact. Le phénomène d'autohésion se produit par l'apport de chaleur à l'endroit du contact. Une opération de soudure de deux matériaux sous l'action de la chaleur s'appelle un thermosoudage. Dans la suite, « soudage » est utilisé de manière synonyme avec « thermosoudage »

Par « enchevêtrement moléculaire de chaînes polymériques » d'un matériau plastique et d'un autre matériau plastique, on comprend deux matériaux plastiques pressés ensemble de telle manière qu'un phénomène d'autohésion se produit. Une telle autohésion est le phénomène décrivant la diffusion intermoléculaire et l'enchevêtrement de chaînes moléculaires à travers une interface polymère formant une liaison forte. À la différence de l'adhésion, laquelle concerne l'énergie de surface (ou des liaisons chimiques secondaires entre deux matériaux soit similaires soit non similaires), l'autohésion concerne l'enchevêtrement de chaînes moléculaires et les liaisons secondaires pour des chaînes polymères de matériaux similaires, c'est-à-dire de matériaux compatibles chimiquement. Dans des conditions idéales, la diffusion est complète lorsque l'interface entre les deux matériaux polymères n'est plus discernable de la masse de chacun des deux matériaux polymères. Par exemple, concernant deux matériaux polymères thermoplastiques, une fois que le contact polymère thermoplastique - polymère thermoplastique est obtenu à l'interface, la diffusion intermoléculaire et l'enchevêtrement est nécessaire pour terminer le processus et former une bonne soudure. Un tel phénomène d'autohésion est par exemple décrit dans la publication « Plastics and Composites Welding Handbook », ISBN 1-56990-313-1, page 23.

Ainsi, le moyen de fixation permet de faciliter le procédé de réalisation du dispositif d'étanchéité pour réservoir à carburant pour véhicules automobiles, permettant par conséquent, la diminution du coût de réalisation du dispositif d'étanchéité pour réservoir à carburant pour véhicules automobiles.

Selon un mode de réalisation préférentiel, le dispositif d'étanchéité pour réservoir à carburant pour véhicules automobiles, est tel que l'élément de fixation, en cas d'échange entre le milieu interne du réservoir à carburant pour voiture automobile et le milieu externe, est apte à être une pièce creuse en son centre, préférentiellement ladite pièce est un anneau.

Par l'expression « en cas d'échange », on entend désigner le fait de la volonté du fabricant du réservoir à carburant pour véhicules automobiles de laisser ouvert l'ouverture de la paroi de structure multicouche afin de permettre une connexion étanche avec d'autres composants.

Par l'expression « une connexion étanche avec d'autres composants », on entend désigner des composants autres que le composant du dispositif d'étanchéité, venant s'insérer dans l'ouverture de la paroi de structure multicouche, tel que le composant est apte à être, de façon non limitative, une pipette, un embout, un col, une valve, une base de module de mesure, une base de module de pompe, un connecteur électrique ou encore un capteur.

Cette connexion permet de réaliser, notamment, des échanges de fluides au centre de l'ouverture, à travers le composant creux en son centre, tout en maintenant le niveau d'imperméabilité du réservoir à carburant pour véhicules automobiles. La perméation du carburant est empêchée de l'ouverture jusqu'à l'extrémité de l'élément de fixation où d'autres composants sont raccordés. Cette connexion est réalisée par toute méthode connue par l'homme de l'art.

Ainsi, la pièce creuse en son centre permet le passage d'un fluide en son centre, tel que de l'air ou du carburant dans les sens de flux et reflux. Un anneau étant plus aisément produit, ledit anneau réduit ainsi les coûts associés de production. De plus, l'anneau du dispositif d'étanchéité pour réservoir à carburant pour véhicules automobiles permet une étanchéité renforcée, ainsi qu'un assemblage plus aisé à obtenir lors de la production dudit dispositif d'étanchéité pour réservoir à carburant pour véhicules automobiles.

Selon un mode de réalisation préférentiel, le dispositif d'étanchéité pour réservoir à carburant pour véhicules automobiles, est tel que l'élément de fixation est apte à être fixé sur la totalité des zones de contact avec la paroi de structure multicouche d'un réservoir à carburant.

Par l'expression « apte à être fixé sur la totalité des zones de contact avec la paroi », on entend désigner toutes les zones de contact possible entre l'élément de fixation et la paroi de structure multicouche d'un réservoir à carburant.

Ainsi, l'élément de fixation du dispositif d'étanchéité pour réservoir à carburant pour véhicules automobiles peut être fixé à la paroi de structure multicouche sans limitation d'espace, facilitant par conséquent le procédé d'obtention du dispositif d'étanchéité pour réservoir à carburant pour véhicules automobiles, réduisant de ce fait le coût d'obtention du dispositif d'étanchéité pour réservoir à carburant pour véhicules automobiles.

Un autre objet de l'invention est de fournir un réservoir à carburant comprenant un dispositif d'étanchéité pour réservoir à carburant pour véhicules automobiles.

L'invention concerne également un procédé d'obtention d'un réservoir à carburant avec un dispositif d'étanchéité tel que présenté plus haut pour véhicules automobiles, comprenant au moins les étapes de :
- Positionner le joint multilobé au contact de la couche de matériau barrière aux carburants de la paroi de structure multicouche du réservoir à carburant ;
- Compresser le joint multilobé par le composant également inséré dans l'ouverture de la paroi de structure multicouche du réservoir à carburant, contre la couche de matériau barrière aux carburants de la paroi de structure multicouche du réservoir à carburant ;
- Fixer l'élément de fixation à la paroi de structure multicouche du réservoir à carburant, la fixation pouvant être choisi parmi différentes méthodes de fixation telles que, la soudure, le collage, le frittage, le surmoulage, préférentiellement, ladite fixation est réalisée par soudure.

Ainsi, les étapes de réalisation d'un dispositif d'étanchéité pour réservoir à carburant pour véhicules automobiles sont facilitées et réduites entrainant par conséquent, une diminution du coût de production dudit dispositif d'étanchéité pour réservoir à carburant pour véhicules automobiles.

### Brève description des dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- La figure 1 présente un réservoir à carburant pour véhicules automobiles muni d'une ouverture selon l'invention ;
- La figure 2 présente une coupe transversale d'une partie du joint multilobé selon l'invention ;
- La figure 3 illustre un dispositif d'étanchéité pour réservoir à carburant pour véhicules automobiles selon l'invention ;
- La figure 4 décrit un dispositif d'étanchéité pour réservoir à carburant pour véhicules automobiles, en cas d'obturation de l'ouverture du réservoir à carburant pour véhicules automobiles selon l'invention présentée en figure 3 ;
- La figure 5 présente un autre mode de réalisation du dispositif d'étanchéité pour réservoir à carburant pour véhicules automobiles, dans lequel, un composant de connexion est connecté avec un réservoir à carburant pour véhicules automobiles selon l'invention ;
- La figure 6 illustre un mode de réalisation alternatif du dispositif d'étanchéité pour réservoir à carburant pour véhicules automobiles, dans lequel le second moyen de liaison est un épaulement ;
- La figure 7 illustre une vue d'un mode de réalisation du dispositif d'étanchéité pour réservoir à carburant pour véhicules automobiles, dans lequel, la face du joint multilobé orientée vers le composant, possède une protubérance.

### Description détaillée d'au moins un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

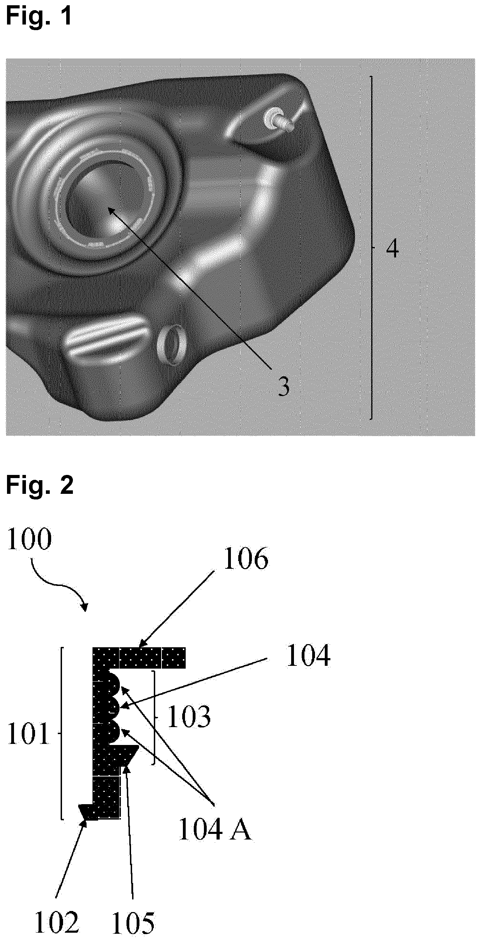

On présente, en relation avec la figure 1, un réservoir à carburant (4) pour véhicules automobiles. Le réservoir à carburant (4) pour véhicules automobiles possède une ouverture (3) apte à recevoir le dispositif (1) d'étanchéité pour réservoir à carburant (4) pour véhicules automobiles selon l'invention, ledit dispositif (1) d'étanchéité n'étant pas représenté dans la figure 1.

La figure 2, expose une coupe transversale d'un mode de réalisation du joint multilobé (100) selon l'invention, ledit joint multilobé (100) est imperméable aux carburants. En effet, le joint multilobé (100) est à base de matériau possédant une faible perméabilité aux carburants, ledit matériau étant du FPM. Le joint multilobé (100) selon l'invention, est composé d'une face (101) apte à être orientée vers un composant (2) apte à s'insérer dans l'ouverture (3) de la paroi (10) de structure multicouche du réservoir à carburant (4) pour véhicules automobiles. Ladite face (101) comprend un premier moyen de liaison (102) se reposant sur ledit composant (2). Le joint multilobé (100) comprend aussi, une face (103) apte à être orientée vers le bord d'une paroi (10) de structure multicouche d'un réservoir à carburant (4) pour véhicules automobiles. Ladite face (103) apte à être orientée vers le bord de la paroi (10) de structure multicouche est composée d'une excroissance (104) apte à être au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) apte à être en contact avec la paroi (10) de structure multicouche du réservoir à carburant (4) pour véhicules automobiles. De plus, le joint multilobé (100) possède sur ladite face (103) apte à être orientée vers le bord d'une paroi (10) de structure multicouche d'un réservoir à carburant (4) pour véhicules automobiles, un second moyen de liaison (105) apte à s'appuyer sur la paroi (10) de structure multicouche d'un réservoir à carburant (4) pour véhicules automobiles. Enfin, le joint multilobé (100) est constitué d'un épaulement (106) venant coiffer le joint multilobé (100). Ledit épaulement (106), est apte à être en contact avec la couche extérieure (12) de la paroi (10) de structure multicouche et ledit composant (2). La paroi (10) de structure multicouche du réservoir à carburant (4) pour véhicules automobiles, le composant (2) apte à s'insérer dans l'ouverture (3) de la paroi (10) de structure multicouche et l'ouverture (3) de la paroi (10) de structure multicouche ne sont pas représentés dans la figure 2.

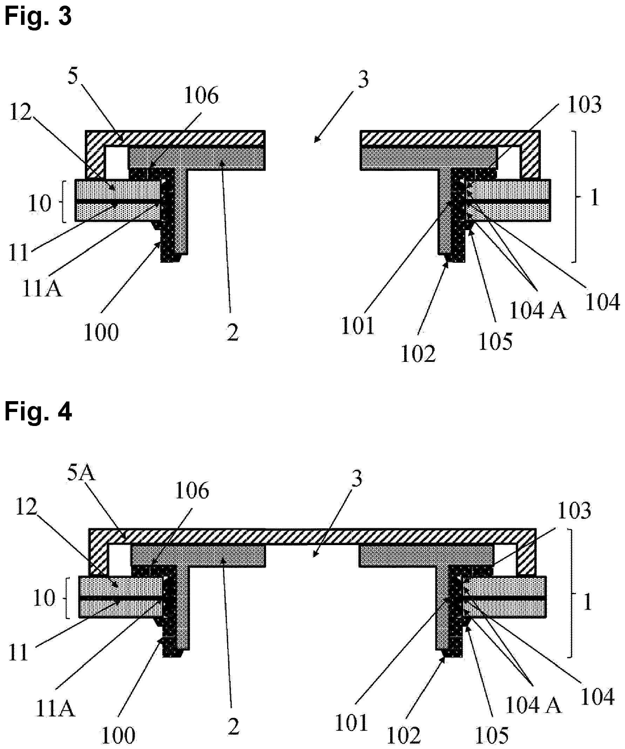

La figure 3, présente une coupe transversale du dispositif (1) d'étanchéité pour réservoir à carburant (4) pour véhicules automobiles selon l'invention. On observe que le dispositif (1) d'étanchéité pour réservoir à carburant (4) pour véhicules automobiles comprend une paroi (10) de structure multicouche ayant une couche de matériau barrière aux carburants (11), ainsi qu'une ouverture (3) dans la paroi (10) de structure multicouche dans laquelle vient s'insérer un joint multilobé (100) imperméable aux carburants, en FPM, et un composant (2), inséré de façon à exercer une compression radiale sur le joint multilobé (100). Le joint multilobé (100) compressé exerçant à son tour une compression radiale sur la paroi (10) de structure multicouche d'un réservoir à carburant (4) pour véhicules automobiles, une fois le dispositif (1) d'étanchéité pour réservoir à carburant (4) pour véhicules automobiles assemblé. L'ensemble joint multilobé (100) et composant (2), insérés dans l'ouverture (3) de la paroi (10) de structure multicouche, est maintenu par la fixation d'un élément de fixation (5) à la couche extérieure (12) de la paroi (10) de structure multicouche, ladite fixation étant une soudure. La fixation de l'élément de fixation (5) vient exercer une compression axiale sur le composant (2) se trouvant entre le joint multilobé (100) et l'élément de fixation (5). Ledit composant (2) exerçant alors à son tour une compression axiale sur l'épaulement (106) du joint multilobé (100), reposant sur la couche extérieure (12) de la paroi (10) de structure multicouche du réservoir à carburant (4) pour véhicules automobiles. Le joint multilobé (100) est composé d'une face (101) orientée vers un composant (2). Ladite face (101) comprend un premier moyen de liaison (102) se reposant sur ledit composant (2). Le joint multilobé (100) comprend aussi une face (103) orientée vers le bord d'une paroi (10) de structure multicouche d'un réservoir à carburant (4) pour véhicules automobiles. Ladite face (103) orientée vers le bord de la paroi (10) de structure multicouche est composée d'une excroissance (104) au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) en contact avec la paroi (10) de structure multicouche du réservoir à carburant (4) pour véhicules automobiles. De plus, le joint multilobé (100) possède sur ladite face (103) orientée vers le bord d'une paroi (10) de structure multicouche d'un réservoir à carburant (4) pour véhicules automobiles, un second moyen de liaison (105) apte à s'appuyer sur la paroi (10) de structure multicouche d'un réservoir à carburant (4) pour véhicules automobiles. Le joint multilobé (100) est constitué d'un épaulement (106) venant coiffer le joint multilobé (100). Ledit épaulement (106), est en contact avec la couche extérieure (12) de la paroi (10) de structure multicouche et ledit composant (2).

La figure 4, expose une coupe transversale d'un second mode de réalisation d'un dispositif (1) d'étanchéité pour réservoir à carburant (4) pour véhicules automobiles selon l'invention illustrée en figure 3. On observe que le dispositif (1) d'étanchéité pour réservoir à carburant (4) pour véhicules automobiles comprend une paroi (10) de structure multicouche ayant une couche de matériau barrière aux carburants (11), ainsi qu'une ouverture (3) dans la paroi (10) de structure multicouche dans laquelle vient s'insérer un joint multilobé (100) imperméable aux carburants, en FPM, et un composant (2), inséré de façon à exercer une compression radiale sur le joint multilobé (100). Le joint multilobé (100) compressé exerçant à son tour une compression radiale sur la paroi (10) de structure multicouche d'un réservoir à carburant (4) pour véhicules automobiles, une fois le dispositif (1) d'étanchéité pour réservoir à carburant (4) pour véhicules automobiles assemblé. L'ensemble joint multilobé (100) et composant (2), insérés dans l'ouverture (3) de la paroi (10) de structure multicouche, est maintenu par la fixation d'un élément de fixation (5A) à la couche extérieure (12) de la paroi (10) de structure multicouche, ladite fixation étant une soudure. La fixation de l'élément de fixation (5A) vient exercer une compression axiale sur le composant (2) se trouvant entre le joint multilobé (100) et l'élément de fixation (5A). Dans ce mode de réalisation particulier, l'élément de fixation (5A) est une pièce pleine venant refermer l'ouverture (3) de la paroi (10) de structure multicouche du réservoir à carburant (4) pour véhicules automobiles. Ledit composant (2) exerçant alors à son tour une compression axiale sur l'épaulement (106) du joint multilobé (100), reposant sur la couche extérieure (12) de la paroi (10) de structure multicouche du réservoir à carburant (4) pour véhicules automobiles. Le joint multilobé (100) est composé d'une face (101) orientée vers un composant (2). Ladite face (101) comprend un premier moyen de liaison (102) se reposant sur ledit composant (2). Le joint multilobé (100) comprend aussi, une face (103) orientée vers le bord d'une paroi (10) de structure multicouche d'un réservoir à carburant (4) pour véhicules automobiles. Ladite face (103) orientée vers le bord de la paroi (10) de structure multicouche est composée d'une excroissance (104) au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) en contact avec la paroi (10) de structure multicouche du réservoir à carburant (4) pour véhicules automobiles. De plus, le joint multilobé (100) possède sur ladite face (103) orientée vers le bord d'une paroi (10) de structure multicouche d'un réservoir à carburant (4) pour véhicules automobiles, un second moyen de liaison (105) apte à s'appuyer sur la paroi (10) de structure multicouche d'un réservoir à carburant (4) pour véhicules automobiles. Enfin le joint multilobé (100) est constitué d'un épaulement (106) venant coiffer le joint multilobé (100). Ledit épaulement (106), est en contact avec la couche extérieure (12) de la paroi (10) de structure multicouche et ledit composant (2).

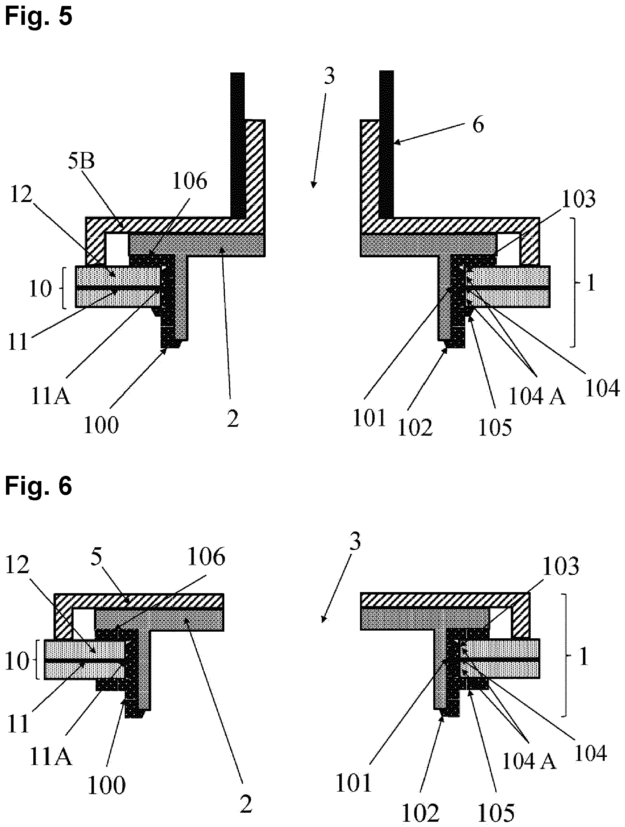

La figure 5 présente une coupe transversale d'un troisième mode de réalisation du dispositif (1) d'étanchéité pour réservoir à carburant (4) pour véhicules automobiles selon l'invention illustrée en figure 3. On observe que le dispositif (1) d'étanchéité pour réservoir à carburant (4) pour véhicules automobiles comprend une paroi (10) de structure multicouche ayant une couche de matériau barrière aux carburants (11), ainsi qu'une ouverture (3) dans la paroi (10) de structure multicouche dans laquelle vient s'insérer un joint multilobé (100) imperméable aux carburants, en FPM, et un composant (2), inséré de façon à exercer une compression radiale sur le joint multilobé (100). Le joint multilobé (100) compressé exerçant à son tour une compression radiale sur la paroi (10) de structure multicouche d'un réservoir à carburant (4) pour véhicules automobiles, une fois le dispositif (1) d'étanchéité pour réservoir à carburant (4) pour véhicules automobiles assemblé. L'ensemble joint multilobé (100) et composant (2), insérés dans l'ouverture (3) de la paroi (10) de structure multicouche, est maintenu par la fixation d'un élément de fixation (5B) à la couche extérieure (12) de la paroi (10) de structure multicouche, ladite fixation étant une soudure. La fixation de l'élément de fixation (5B) vient exercer une compression axiale sur le composant (2) se trouvant entre le joint multilobé (100) et l'élément de fixation (5B). Dans ce mode de réalisation particulier, l'élément de fixation (5B) est une pièce creuse en son centre permettant la connexion avec d'autres composants (6) possédant une faible perméabilité aux carburants. Ledit composant (2) exerçant alors à son tour une compression axiale sur l'épaulement (106) du joint multilobé (100), reposant sur la couche extérieure (12) de la paroi (10) de structure multicouche du réservoir à carburant (4) pour véhicules automobiles. Le joint multilobé (100) est composé d'une face (101) orientée vers un composant (2). Ladite face (101) comprend un premier moyen de liaison (102) se reposant sur ledit composant (2). Le joint multilobé (100) comprend aussi, une face (103) orientée vers le bord d'une paroi (10) de structure multicouche d'un réservoir à carburant (4) pour véhicules automobiles. Ladite face (103) orientée vers le bord de la paroi (10) de structure multicouche est composée d'une excroissance (104) au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) en contact avec la paroi (10) de structure multicouche du réservoir à carburant (4) pour véhicules automobiles. De plus, le joint multilobé (100) possède sur ladite face (103) orientée vers le bord d'une paroi (10) de structure multicouche d'un réservoir à carburant (4) pour véhicules automobiles, un second moyen de liaison (105) apte à s'appuyer sur la paroi (10) de structure multicouche d'un réservoir à carburant (4) pour véhicules automobiles. Enfin, le joint multilobé (100) est constitué d'un épaulement (106) venant coiffer le joint multilobé (100). Ledit épaulement (106), est en contact avec la couche extérieure (12) de la paroi (10) de structure multicouche et ledit composant (2).

La figure 6 illustre une coupe transversale d'un mode de réalisation alternatif du dispositif (1) d'étanchéité pour réservoir à carburant (4) pour véhicules automobiles selon l'invention. On observe que le dispositif (1) d'étanchéité pour réservoir à carburant (4) pour véhicules automobiles comprend une paroi (10) de structure multicouche ayant une couche de matériau barrière aux carburants (11), ainsi qu'une ouverture (3) dans la paroi (10) de structure multicouche dans laquelle vient s'insérer un joint multilobé (100) imperméable aux carburants, en FPM, et un composant (2), inséré de façon à exercer une compression radiale sur le joint multilobé (100). Le joint multilobé (100) compressé exerçant à son tour une compression radiale sur la paroi (10) de structure multicouche d'un réservoir à carburant (4) pour véhicules automobiles, une fois le dispositif (1) d'étanchéité pour réservoir à carburant (4) pour véhicules automobiles assemblé. L'ensemble joint multilobé (100) et composant (2), insérés dans l'ouverture (3) de la paroi (10) de structure multicouche est maintenu par la fixation d'un élément de fixation (5) à la couche extérieure (12) de la paroi (10) de structure multicouche, ladite fixation étant une soudure. La fixation de l'élément de fixation (5) vient exercer une compression axiale sur le composant (2) se trouvant entre le joint multilobé (100) et l'élément de fixation (5). Ledit composant (2) exerçant alors à son tour une compression axiale sur l'épaulement (106) du joint multilobé (100), reposant sur la couche extérieure (12) de la paroi (10) de structure multicouche du réservoir à carburant (4) pour véhicules automobiles. Le joint multilobé (100) est composé d'une face (101) orientée vers un composant (2). Ladite face (101) comprend un premier moyen de liaison (102) se reposant sur ledit composant (2). Le joint multilobé (100) comprend aussi, une face (103) orientée vers le bord d'une paroi (10) de structure multicouche d'un réservoir à carburant (4) pour véhicules automobiles. Ladite face (103) orientée vers le bord de la paroi (10) de structure multicouche est composée d'une excroissance (104) au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) en contact avec la paroi (10) de structure multicouche du réservoir à carburant (4) pour véhicules automobiles. De plus, le joint multilobé (100) possède sur ladite face (103) orientée vers le bord d'une paroi (10) de structure multicouche d'un réservoir à carburant (4) pour véhicules automobiles, un second moyen de liaison (105) apte à s'appuyer sur la paroi (10) de structure multicouche d'un réservoir à carburant (4) pour véhicules automobiles. Dans ce mode de réalisation particulier, le second moyen de liaison (105) est un second épaulement venant s'appuyer sur la paroi (10) de structure multicouche. Le joint multilobé (100) est constitué d'un épaulement (106) venant coiffer le joint multilobé (100). Ledit épaulement (106), est en contact avec la couche extérieure (12) de la paroi (10) de structure multicouche et ledit composant (2).

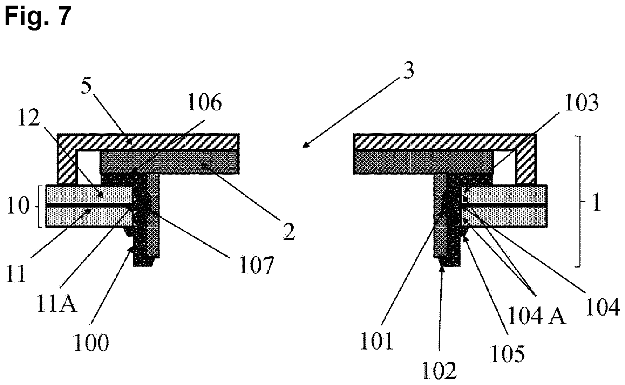

La figure 7 décrit une coupe transversale du dispositif (1) d'étanchéité pour réservoir à carburant (4) pour véhicules automobiles selon l'invention. On observe que le dispositif (1) d'étanchéité pour réservoir à carburant (4) pour véhicules automobiles comprend une paroi (10) de structure multicouche ayant une couche de matériau barrière aux carburants (11), ainsi qu'une ouverture (3) dans la paroi (10) de structure multicouche dans laquelle vient s'insérer un joint multilobé (100) imperméable aux carburants, en FPM, et un composant (2), inséré de façon à exercer une compression radiale sur le joint multilobé (100). Le joint multilobé (100) compressé exerçant à son tour une compression radiale sur la paroi (10) de structure multicouche d'un réservoir à carburant (4) pour véhicules automobiles, une fois le dispositif (1) d'étanchéité pour réservoir à carburant (4) pour véhicules automobiles assemblé. L'ensemble joint multilobé (100) et composant (2), insérés dans l'ouverture (3) de la paroi (10) de structure multicouche, est maintenu par la fixation d'un élément de fixation (5) à la couche extérieure (12) de la paroi (10) de structure multicouche, ladite fixation étant une soudure. La fixation de l'élément de fixation (5) vient exercer une compression axiale sur le composant (2) se trouvant entre le joint multilobé (100) et l'élément de fixation (5). Ledit composant (2) exerçant alors à son tour une compression axiale sur l'épaulement (106) du joint multilobé (100), reposant sur la couche extérieure (12) de la paroi (10) de structure multicouche du réservoir à carburant (4) pour véhicules automobiles. Le joint multilobé (100) est composé d'une face (101) orientée vers un composant (2). Ladite face (101) comprend un premier moyen de liaison (102) se reposant sur ledit composant (2) et dans ce mode de réalisation particulier, une protubérance (107) venant s'appuyer contre le composant (2). Le joint multilobé (100) comprend aussi, une face (103) orientée vers le bord d'une paroi (10) de structure multicouche d'un réservoir à carburant (4) pour véhicules automobiles. Ladite face (103) orientée vers le bord de la paroi (10) de structure multicouche est composée d'une excroissance (104) au contact (11A) de la couche de matériau barrière aux carburants (11) de la paroi (10) de structure multicouche d'un réservoir à carburant (4) pour véhicules automobiles. Ladite excroissance (104) est entourée de part et d'autre d'excroissances (104A) en contact avec la paroi (10) de structure multicouche du réservoir à carburant (4) pour véhicules automobiles. De plus, le joint multilobé (100) possède sur ladite face (103) orientée vers le bord d'une paroi (10) de structure multicouche d'un réservoir à carburant (4) pour véhicules automobiles, un second moyen de liaison (105) apte à se reposer sur la paroi (10) de structure multicouche d'un réservoir à carburant (4) pour véhicules automobiles. Enfin, le joint multilobé (100) est constitué d'un épaulement (106) venant coiffer le joint multilobé (100). Ledit épaulement (106), est en contact avec la couche extérieure (12) de la paroi (10) de structure multicouche et ledit composant (2).

## Revendications

1. Joint multilobé (100) pour un dispositif (1) d'étanchéité d'une ouverture (3) de paroi (10) d'un réservoir à carburant (4), la paroi (10) de structure multicouche ayant au moins une couche de matériau barrière aux carburants (11) et une ouverture (3) dans la paroi (10) de structure multicouche, le joint multilobé (100) étant imperméable aux carburants et apte à être positionné en contact (11A), au niveau de l'ouverture (3) de la paroi (10) de structure multicouche du réservoir à carburant (4), entre la couche de matériau barrière aux carburants (11) de la paroi (10) de structure multicouche du réservoir à carburant (4) et un composant (2), **caractérisé en ce que** le joint multilobé (100) comporte, sur la face (103) apte à être en contact (11A) avec la couche de matériau barrière aux carburants (11) de la paroi (10) de structure multicouche, au moins deux excroissances (104, 104A) dont une (104) vient s'appuyer (11A) sur la couche de matériau barrière aux carburants (11) de la paroi (10) de structure multicouche.

2. Joint multilobé (100) selon la revendication précédente, comprenant, sur la face (103) apte à être en contact (11A) avec la couche de matériau barrière aux carburants (11) de la paroi (10) de structure multicouche, une excroissance (104) venant s'appuyer sur la couche de matériau barrière aux carburants (11), et deux autres excroissances (104A) de part et d'autre de l'excroissance (104) venant s'appuyer sur la couche de matériau barrière aux carburants (11) de la paroi (10) de structure multicouche.

3. Joint multilobé (100) selon la revendication 1 ou 2, comprenant en outre au moins un épaulement (106) destiné à reposer sur une couche extérieure (12) de la paroi (10) de structure multicouche d'un réservoir à carburant (4).

4. Dispositif (1) d'étanchéité pour une ouverture (3) d'une paroi (10) d'un réservoir à carburant (4) pour véhicules automobiles, la paroi (10) de structure multicouche ayant au moins une couche de matériau barrière aux carburants (11) et une ouverture (3) dans la paroi (10) de structure multicouche, **caractérisé en ce que** ledit dispositif (1) comprend :
- un composant (2) apte à être inséré dans l'ouverture (3) de la paroi (10) de structure multicouche du réservoir à carburant (4) ;
- un joint multilobé (100) selon l'une des revendications 1 à 3 apte à être positionné entre la couche de matériau barrière aux carburants (11) de la paroi (10) de structure multicouche du réservoir à carburant (4) et le composant (2) ; et
- un élément de fixation (5) apte à être fixé à au moins une couche extérieure (12) de la paroi (10) de structure multicouche du réservoir à carburant (4).

5. Dispositif (1) d'étanchéité pour réservoir à carburant (4) selon la revendication précédente, tel que le joint multilobé (100) possède, sur la face (101) apte à être en contact avec le composant (2), un premier moyen de liaison (102) se reposant sur le composant (2).

6. Dispositif (1) d'étanchéité pour réservoir à carburant (4) selon une quelconque des revendications précédentes, tel que le joint multilobé (100) possède, sur la face (103) apte à être en contact (11A) avec la couche de matériau barrière aux carburants (11) de la paroi (10) de structure multicouche, un second moyen de liaison (105) se reposant sur la paroi (10) de structure multicouche du réservoir à carburant (4).

7. Dispositif (1) d'étanchéité pour réservoir à carburant (4) selon une quelconque des revendications 4 à 6, tel que le composant (2) et le joint multilobé (100) sont aptes à exercer une pression radiale sur la couche de matériau barrière aux carburants (11), une fois le dispositif (1) d'étanchéité pour réservoir à carburant (4) pour véhicules automobiles assemblé.

8. Dispositif (1) d'étanchéité pour réservoir à carburant (4) selon une quelconque des revendications 4 à 7, tel que l'élément de fixation (5A), est apte à être une pièce pleine.

9. Dispositif (1) d'étanchéité pour réservoir à carburant (4) selon une quelconque des revendications 4 à 7, tel que l'élément de fixation (5B), est apte à être une pièce creuse en son centre.

10. Dispositif (1) d'étanchéité pour réservoir à carburant (4) selon une quelconque des revendications 4 à 8, tel que l'élément de fixation (5) est apte à être fixé sur la totalité des zones de contact avec la paroi (10) de structure multicouche d'un réservoir à carburant (4).

11. Dispositif (1) d'étanchéité pour réservoir à carburant (4) selon une quelconque des revendications 4 à 10, tel que le joint multilobé (100) est surmoulé sur le composant (2).

12. Dispositif (1) d'étanchéité pour réservoir à carburant (4) selon une quelconque des revendications 4 à 11, tel que l'élément de fixation (5) est monobloc avec le composant (2).

13. Réservoir à carburant (4) comprenant le dispositif (1) d'étanchéité selon une quelconque des revendications 4 à 12.

14. Procédé de fabrication d'un réservoir à carburant (4) selon la revendication précédente comprenant au moins les étapes de :
- Positionner le joint multilobé (100) au contact (11A) de la couche de matériau barrière aux carburants (11) de la paroi (10) de structure multicouche du réservoir à carburant (4) ;
- Compresser le joint multilobé (100) par le composant (2) également inséré dans l'ouverture (3) de la paroi (10) de structure multicouche du réservoir à carburant (4), contre la couche de matériau barrière aux carburants (11) de la paroi (10) de structure multicouche du réservoir à carburant (4) ;
- Fixer l'élément de fixation (5) à la paroi (10) de structure multicouche du réservoir à carburant (4).

15. Procédé selon la revendication précédente, tel que la fixation de l'élément de fixation (5) est choisie parmi la soudure, le collage, le frittage et le surmoulage.

## Patentansprüche

1. Mehrlippendichtung (100) für eine Vorrichtung (1) zum Abdichten einer Öffnung (3) in einer Wand (10) eines Kraftstofftanks (4), wobei die Wand (10) mit mehrschichtiger Struktur mindestens eine Schicht aus einem Kraftstoffbarrierematerial (11) und eine Öffnung (3) in der Wand (10) mit mehrschichtiger Struktur aufweist, wobei die Mehrlippendichtung (100) für Kraftstoffe undurchlässig ist und in Kontakt (11A) an der Öffnung (3) in der Wand (10) mit mehrschichtiger Struktur des Kraftstofftanks (4) positioniert werden kann, zwischen der Schicht aus Kraftstoffbarrierematerial (11) der Wand (10) mit mehrschichtiger Struktur des Kraftstofftanks (4) und einem Bauteil (2), **dadurch gekennzeichnet, dass** die Mehrlippendichtung (100) auf der Seite (103), die ausgestaltet ist, mit der Schicht aus Kraftstoffbarrierematerial (11) der Wand (10) mit mehrschichtiger Struktur in Kontakt (11A) zu kommen, mindestens zwei Ausstülpungen (104, 104A) aufweist, von denen eine (104) an der Schicht aus Kraftstoffbarrierematerial (11) der Wand (10) mit mehrschichtiger Struktur anliegt (11A).

2. Mehrlippendichtung (100) nach dem vorhergehenden Anspruch, aufweisend, auf der Seite (103), die ausgestaltet ist, in Kontakt (11A) mit der Schicht aus Kraftstoffbarrierematerial (11) der Wand (10) mit mehrschichtiger Struktur zu sein, eine Ausstülpung (104), die an der Schicht aus Kraftstoffbarrierematerial (11) anliegt, und zwei weitere Ausstülpungen (104A) auf beiden Seiten der Ausstülpung (104), die an der Schicht aus Kraftstoffbarrierematerial (11) der Wand (10) mit mehrschichtiger Struktur anliegen.

3. Mehrlippendichtung (100) nach Anspruch 1 oder 2, ferner aufweisend mindestens eine Schulter (106), die dazu bestimmt ist, auf einer äußeren Schicht (12) der Wand (10) mit mehrschichtiger Struktur eines Kraftstofftanks (4) aufzuliegen.

4. Dichtvorrichtung (1) für eine Öffnung (3) in einer Wand (10) eines Kraftstofftanks (4) für Kraftfahrzeuge, wobei die Wand (10) mit mehrschichtiger Struktur mindestens eine Schicht aus Kraftstoffbarrierematerial (11) und eine Öffnung (3) in der Wand (10) mit mehrschichtiger Struktur aufweist, **dadurch gekennzeichnet, dass** die Vorrichtung (1) Folgendes umfasst:
- ein Bauteil (2), das ausgestaltet ist, in die Öffnung (3) in der Wand (10) mit mehrschichtiger Struktur des Kraftstofftanks (4) eingesetzt zu werden;
- eine Mehrlippendichtung (100) nach einem der Ansprüche 1 bis 3, die ausgestaltet ist, zwischen der Schicht aus Kraftstoffbarrierematerial (11) der Wand (10) mit mehrschichtiger Struktur des Kraftstofftanks (4) und das Bauteil (2) positioniert zu werden; und
- ein Befestigungselement (5), das ausgestaltet ist, an mindestens einer äußeren Schicht (12) der Wand (10) mit mehrschichtiger Struktur des Kraftstofftanks (4) befestigt zu werden.

5. Dichtvorrichtung (1) für einen Kraftstofftank (4) nach dem vorhergehenden Anspruch, derart, dass die Mehrlippendichtung (100) auf der Seite (101), die ausgestaltet ist, mit dem Bauteil (2) in Kontakt zu kommen, ein erstes Verbindungsmittel (102) besitzt, das auf dem Bauteil (2) aufliegt.

6. Dichtvorrichtung (1) für einen Kraftstofftank (4) nach einem der vorhergehenden Ansprüche, derart, dass die Mehrlippendichtung (100) auf der Seite (103), die ausgestaltet ist, mit der Schicht aus Kraftstoffbarrierematerial (11) der Wand (10) mit mehrschichtiger Struktur in Kontakt (11A) zu kommen, ein zweites Verbindungsmittel (105) besitzt, das auf der Wand (10) mit mehrschichtiger Struktur des Kraftstofftanks (4) aufliegt.

7. Dichtvorrichtung (1) für einen Kraftstofftank (4) nach einem der Ansprüche 4 bis 6, derart, dass das Bauteil (2) und die Mehrlippendichtung (100) ausgestaltet sind, einen radialen Druck auf die Schicht aus Kraftstoffbarrierematerial (11) auszuüben, wenn die Dichtvorrichtung (1) für einen Kraftstofftank (4) für Kraftfahrzeuge zusammengebaut ist.

8. Dichtvorrichtung (1) für einen Kraftstofftank (4) nach einem der Ansprüche 4 bis 7, derart, dass das Befestigungselement (5A) ausgestaltet ist, ein massives Teil zu sein.

9. Dichtvorrichtung (1) für einen Kraftstofftank (4) nach einem der Ansprüche 4 bis 7, derart, dass das Befestigungselement (5B), geeignet ist, ein in seiner Mitte hohles Teil zu sein.

10. Dichtvorrichtung (1) für einen Kraftstofftank (4) nach einem der Ansprüche 4 bis 8, derart, dass das Befestigungselement (5) ausgestaltet ist, an der Gesamtheit der Kontaktbereiche mit der Wand (10) mit mehrschichtiger Struktur eines Kraftstofftanks (4) befestigt zu werden.

11. Dichtvorrichtung (1) für einen Kraftstofftank (4) nach einem der Ansprüche 4 bis 10, derart, dass die Mehrlippendichtung (100) auf das Bauteil (2) aufgespritzt ist.

12. Dichtvorrichtung (1) füreinen Kraftstofftank (4) nach einem der Ansprüche 4 bis 11, derart, dass das Befestigungselement (5) einstückig mit dem Bauteil (2) ausgebildet ist.

13. Kraftstofftank (4), der die Dichtvorrichtung (1) nach einem der Ansprüche 4 bis 12 umfasst.

14. Verfahren zur Herstellung eines Kraftstofftanks (4) nach dem vorhergehenden Anspruch, das mindestens die folgenden Schritte umfasst:
- Positionieren der Mehrlippendichtung (100) in Kontakt (11A) mit der Schicht aus Kraftstoffbarrierematerial (11) der Wand (10) mit mehrschichtiger Struktur des Kraftstofftanks (4);
- Zusammendrücken der Mehrlippendichtung (100) durch das Bauteil (2), das ebenfalls in die Öffnung (3) der Wand (10) mit mehrschichtiger Struktur des Kraftstofftanks (4) eingesetzt ist, gegen die Schicht aus Kraftstoffbarrierematerial (11) der Wand (10) mit mehrschichtiger Struktur des Kraftstofftanks (4);
- Befestigen des Befestigungselements (5) an der Wand (10) mit mehrschichtiger Struktur des Kraftstofftanks (4).

15. Verfahren nach dem vorhergehenden Anspruch, derart, dass die Befestigung des Befestigungselements (5) aus Schweißen, Kleben, Sintern und Umspritzen ausgewählt wird.

## Claims

1. Multi-lobe seal (100) for a sealing device (1) for sealing an opening (3) in a wall (10) of a fuel tank (4), the multi-layer wall (10) having at least one layer (11) of fuel barrier material and an opening (3) in the multi-layer wall (10), the multi-lobe seal (100) being fuel-impermeable and capable of being positioned in contact (11A), at the opening (3) in the multi-layer wall (10) of the fuel tank (4), between the layer (11) of fuel barrier material of the multi-layer wall (10) of the fuel tank (4) and a component (2), **characterized in that** the multi-lobe seal (100) comprises, on the face (103) capable of being in contact (11A) with the layer (11) of fuel barrier material of the multi-layer wall (10), at least two protrusions (104, 104A), one (104) of which bears (11A) on the layer (11) of fuel barrier material of the multi-layer wall (10).

2. Multi-lobe seal (100) according to the preceding claim, comprising, on the face (103) capable of being in contact (11A) with the layer (11) of fuel barrier material of the multi-layer wall (10), a protrusion (104) bearing on the layer (11) of fuel barrier material, and two other protrusions (104A) on either side of the protrusion (104) bearing on the layer (11) of fuel barrier material of the multi-layer wall (10).

3. Multi-lobe seal (100) according to either claim 1 or claim 2, further comprising at least one shoulder (106) intended to rest on an outer layer (12) of the multi-layer wall (10) of a fuel tank (4).

4. Sealing device (1) for an opening (3) in a wall (10) of a motor vehicle fuel tank (4), the wall (10) having a multi-layer structure including at least one layer (11) of fuel barrier material and an opening (3) in the multi-layer wall (10), **characterized in that** said device (1) comprises:
- a component (2) capable of being inserted into the opening (3) in the multi-layer wall (10) of the fuel tank (4);
- a multi-lobe seal (100) according to any of claims 1 to 3 capable of being positioned between the layer (11) of fuel barrier material of the multi-layer wall (10) of the fuel tank (4) and the component (2); and
- a fastening element (5) capable of being fastened to at least one outer layer (12) of the multi-layer wall (10) of the fuel tank (4).

5. Sealing device (1) for a fuel tank (4) according to the preceding claim, such that the multi-lobe seal (100) has, on the face (101) capable of being in contact with the component (2), a first connecting means (102) resting on the component (2).

6. Sealing device (1) for a fuel tank (4) according to any of the preceding claims, such that the multi-lobe seal (100) has, on the face (103) capable of being in contact (11A) with the layer (11) of fuel barrier material of the multi-layer wall (10), a second connecting means (105) resting on the multi-layer wall (10) of the fuel tank (4).

7. Sealing device (1) for a fuel tank (4) according to any of claims 4 to 6, such that the component (2) and the multi-lobe seal (100) are capable of exerting a radial pressure on the layer (11) of fuel barrier material once the sealing device (1) for a motor vehicle fuel tank (4) has been assembled.

8. Sealing device (1) for a fuel tank (4) according to any of claims 4 to 7, such that the fastening element (5A) is capable of being a solid part.

9. Sealing device (1) for a fuel tank (4) according to any of claims 4 to 7, such that the fastening element (5B) is capable of being a part that is hollow at its center.

10. Sealing device (1) for a fuel tank (4) according to any of claims 4 to 8, such that the fastening element (5) is capable of being fastened on all of the areas in contact with the multi-layer wall (10) of a fuel tank (4).

11. Sealing device (1) for a fuel tank (4) according to any of claims 4 to 10, such that the multi-lobe seal (100) is overmolded onto the component (2).

12. Sealing device (1) for a fuel tank (4) according to any of claims 4 to 11, such that the fastening element (5) is integral with the component (2).

13. Fuel tank (4) comprising the sealing device (1) according to any of claims 4 to 12.

14. Method for producing a fuel tank (4) according to the preceding claim comprising at least the steps of:
- positioning the multi-lobe seal (100) in contact (11A) with the layer (11) of fuel barrier material of the multi-layer wall (10) of the fuel tank (4);
- compressing the multi-lobe seal (100), by the component (2) also inserted into the opening (3) in the multi-layer wall (10) of the fuel tank (4), against the layer (11) of fuel barrier material of the multi-layer wall (10) of the fuel tank (4);
- fastening the fastening element (5) to the multi-layer wall (10) of the fuel tank (4).

15. Method according to the preceding claim, such that the fastening of the fastening element (5) is selected from welding, gluing, sintering and overmolding.
